# EUROPEAN PATENT APPLICATION

(11) **EP 4 525 275 A1**
(43) Date of publication of application: **19.03.2025**
(21) Application number: 23841791.9
(22) Date of filing: 29.03.2023
(51) Int. Cl.: H02K 3/50, H02K 5/22

(54) **BUSBAR ASSEMBLY, MOTOR STRUCTURE, ELECTRIC POWER STEERING SYSTEM, AND VEHICLE**

(30) Priority: 22.07.2022 CN 202210867515; 22.07.2022 CN 202221904223 U; 22.07.2022 CN 202210867171; 22.07.2022 CN 202221899908 U
(71) Applicant: Anhui Welling Auto Parts Co., Ltd., Hefei, Anhui 230031 (CN); Guangdong Welling Auto Parts Co., Ltd., Foshan, Guangdong 528311 (CN)
(72) Inventor: LV, Chenpeng, Hefei, Anhui 230031 (CN); SHI, Tao, Hefei, Anhui 230031 (CN); XU, Haoyang, Hefei, Anhui 230031 (CN); LI, Haiyun, Hefei, Anhui 230031 (CN)
(74) Representative: RGTH
(86) International application number: PCT/CN2023/084614
(87) International publication number: WO 2024/016718

(57) **Abstract**

Embodiments of the present application provide a busbar assembly, a motor structure, an electric power steering system, and a vehicle. The busbar assembly comprises: a base body comprising a plurality of phase copper bars and a plurality of neutral point copper bars, the phase copper bars and the neutral point copper bars being integrally injection-molded to form a copper bar support frame; and a terminal support frame provided on the base body The plurality of phase copper bars are the same in shape, and the plurality of neutral point copper bars are the same in shape. The neutral point copper bars comprise neutral point copper bar bodies extending in the radial direction, the phase copper bars comprise phase copper bar bodies extending in the axial direction, and the projection of at least one phase copper bar body and the projection of at least one neutral point copper bar body on an end face of the base body overlap each other.

## Description

This disclosure claims priority to Chinese Patent Application No. 202210867515.6and entitled "BUSBAR ASSEMBLY, MOTOR STRUCTURE, ELECTRIC POWER STEERING SYSTEM, AND VEHICLE", Chinese Patent Application No. 202221904223.7 and entitled "BUSBAR ASSEMBLY, MOTOR STRUCTURE, ELECTRIC POWER STEERING SYSTEM, AND VEHICLE", Chinese Patent Application No. 202210867171.9 and entitled "BUSBAR ASSEMBLY, MOTOR STRUCTURE, ELECTRIC POWER STEERING SYSTEM, AND VEHICLE", and Chinese Patent Application No. 202221899908.7 and entitled "BUSBAR ASSEMBLY, MOTOR STRUCTURE, ELECTRIC POWER STEERING SYSTEM, AND VEHICLE", filed with China National Intellectual Property Administration on July 22, 2022, which are incorporated herein by reference in their entirety.

### FIELD

The present disclosure relates to the field of motors, and particularly relates to a busbar assembly, a motor structure, an electric power steering system and a vehicle.

### BACKGROUND

Currently, with the rapid development of the technologies of vehicles, especially new energy vehicles, electric drive systems are gradually moving towards the directions of high-speed, miniaturization, high efficiency, etc., and at the same time, the whole vehicle has put forward higher requirements for the cost and performance of electric drive systems. Therefore, a motor assembly is gradually developing towards the directions of miniaturization, lightweight, integration, etc. EPS (Electric Power Steering) brushless motors are increasingly favored by people due to their outstanding advantages such as low noise, smooth operation, long service life, and high power density.

### Technical Problem

In the prior art, during the production of the busbar of a traditional EPS motor, usually, there are various shapes of copper bars in the same busbar, and it is necessary to design separate molds for each type of copper bar, which will increase production costs.

### SUMMARY

The present disclosure aims to solve at least one of the technical problems in the prior art or the related art.

In view of this, the embodiments of the first aspect of the present disclosure provide a busbar assembly.

The embodiments of the second aspect of the present disclosure provide a motor structure.

The embodiments of the third aspect of the present disclosure provide an electric power steering system.

The embodiments of the fourth aspect of the present disclosure provide a vehicle.

In order to achieve the above purpose, the embodiments of the first aspect of the present disclosure provide a busbar assembly, comprising: a base body comprising a plurality of phase copper bars and a plurality of neutral point copper bars, wherein, the phase copper bars and the neutral point copper bars are integrally injection-molded to form a copper bar support frame, and the plurality of phase copper bars and the plurality of neutral point copper bars are arranged along a circumferential direction of the copper bar support frame; and a terminal support frame provided on the base body, wherein the terminal support frame comprises a plurality of connecting terminals connected to the phase copper bars; wherein, the plurality of phase copper bars are the same in shape, and the plurality of neutral point copper bars are the same in shape; the neutral point copper bars comprise neutral point copper bar bodies extending in a radial direction of the base body, the phase copper bars comprise phase copper bar bodies extending in an axial direction of the base body, and projection of at least one phase copper bar body and projection of at least one neutral point copper bar body on an end face of the base body overlap each other.

In the above embodiment, a width direction of the phase copper bar body coincides with the axial direction of the base body, and the width direction is a direction perpendicular to an extending direction of the phase copper bar in an extending plane of the phase copper bar.

In the above embodiment, the plurality of neutral point copper bars are arranged circumferentially around an axis of the base body, and the plurality of phase copper bars are rotationally symmetric about the axis of the base body.

In the above embodiment, the neutral point copper bar comprises: the neutral point copper bar body in an arc shape; a plurality of transition bending parts provided at an outer side of the neutral point copper bar body in a radial direction of the neutral point copper bar body, wherein the transition bending parts are formed by bending the neutral point copper bar body along the axial direction; and neutral hook parts, connected to the transition bending parts.

In the above embodiment, the phase copper bar body comprises a first copper bar part, a second copper bar part and a third copper bar part having different radial positions, wherein the first copper bar part is connected to the second copper bar part through a first bending part, and the second copper bar part is connected to the third copper bar part through a second bending part.

In the above embodiment, a plane part is provided at an end of the first copper bar part away from the first bending part, the plane part extends along the radial direction, and a phase hook part is formed at an end of the plane part away from the first copper bar part; wherein, the width direction of the plane part is perpendicular to the axial direction of the base body.

In the above embodiment, every three phase copper bars are arranged around an axis in a circumferential direction and are arranged stacking one another, wherein, in two adjacent phase copper bars, the plane part of one phase copper bar covers the second copper bar part of the other phase copper bar.

In the above embodiment, in the three phase copper bars in the stacked arrangement, radial positions of the first copper bar parts of the three phase copper bars are the same, radial positions of the second copper bar parts of the three phase copper bars are the same, and radial positions of the third copper bar parts of the three phase copper bars are the same.

In the above embodiment, at least a portion of the three first copper bar parts are located in a circle of a same radius, at least a portion of the three second copper bar parts are located in a circle of a same radius, and at least a portion of the three third copper bar parts are located in a circle of a same radius.

In the above embodiment, the phase copper bar body is provided with a terminal connecting part extending along the axial direction, the connecting terminal is electrically connected to the terminal connecting part, and the terminal connecting part is arranged at a position on the phase copper bar body between the plane part and the first bending part .

In the above embodiment, each phase copper bar is provided with two phase hook parts extending outward along the radial direction, and the two phase hook parts are respectively provided on the plane part and on the third copper bar part.

In the above embodiment, both of the two phase hook parts on each phase copper bar are located at an outer side of the phase copper bar in the radial direction.

In the above embodiment, opening of the phase hook part faces an inner side of the base body in the radial direction of the base body, or faces a circumferential side of the base body.

In the above embodiment, the openings of all the phase hook parts face a same direction.

In the above embodiment, the phase copper bars are formed by bending a plate body multiple times.

The embodiments of the second aspect of the present disclosure provide a motor structure, comprising: a rotor structure; a stator structure, coaxially arranged with the rotor structure; wherein, any busbar assembly in the above first aspect is provided at one end of the stator structure, and the busbar assembly is electrically connected to the stator structure.

The embodiments of the third aspect of the present disclosure provide an electric power steering system, comprising the motor structure in the embodiments of the above second aspect, and therefore, the electric power steering system provided by the present disclosure has all the beneficial effects of the motor structure provided by any of the above embodiments.

The embodiments of the fourth aspect of the present disclosure provide a vehicle, comprising: a vehicle body; any motor structure in the above second aspect, provided in the vehicle body; or comprising the electric power steering system in the above third aspect, provided in the vehicle body.

### Beneficial Effect

All the neutral point copper bars in the present disclosure are the same in shape, and all the phase copper bars are the same in shape, and this only needs to design two molds during the production, and the production of all the phase copper bars and the neutral point copper bars can be achieved, and this can greatly reduce the development and production costs of the molds required for production.

The additional aspects and advantages of the present disclosure will be obvious in the following description, or can be understood through the implementation of the present disclosure.

### BRIEF DESCRIPTION OF THE DRAWINGS

FIG. 1 is a schematic view of the structure of a busbar assembly according to an embodiment of the present disclosure;
FIG.2 is a schematic view of the structure of a busbar assembly according to an embodiment of the present disclosure;
FIG.3 is a schematic view of the structure of a busbar assembly according to an embodiment of the present disclosure;
FIG.4 is a schematic view of the structure of a busbar assembly according to an embodiment of the present disclosure;
FIG.5 is a schematic view of the structure of a terminal support frame and a connecting terminal according to an embodiment of the present disclosure;
FIG.6 is a schematic view of a stacked structure of a plurality of phase copper bars according to an embodiment of the present disclosure;
FIG.7 is a schematic view of a stacked structure of a phase copper bar according to an embodiment of the present disclosure;
FIG.8 is a schematic view of the structure of a plurality of neutral point copper bars according to an embodiment of the present disclosure;
FIG.9 is a schematic view of the structure of a neutral point copper bar according to an embodiment of the present disclosure;
FIG. 10 is a schematic view of the structure of a motor structure according to an embodiment of the present disclosure;
FIG. 11 is a schematic view of the structure of an electric power steering system according to an embodiment of the present disclosure;
FIG. 12 is a schematic view of the structure of a vehicle according to an embodiment of the present disclosure; and
FIG. 13 is a schematic view of the structure of a vehicle according to an embodiment of the present disclosure.

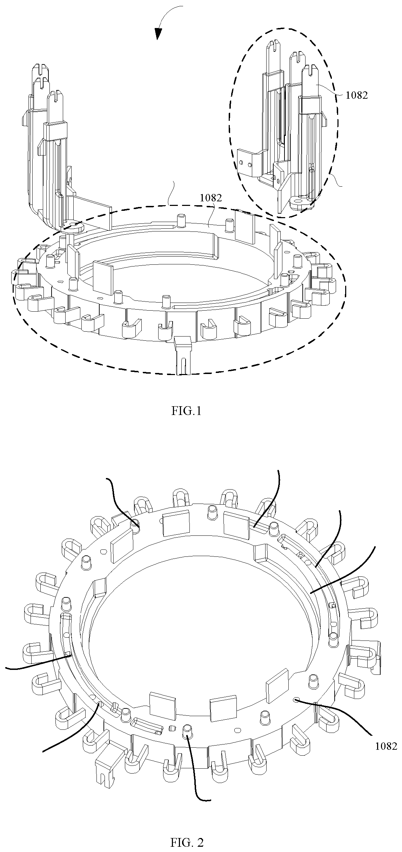

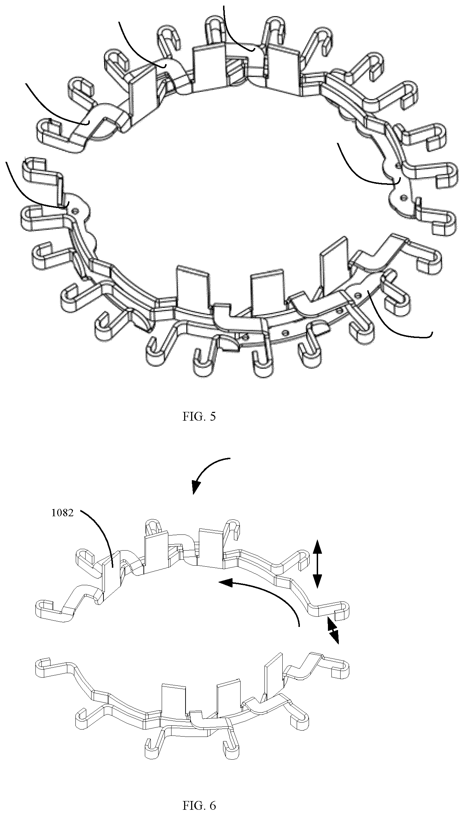

Wherein, the corresponding relationships between the reference signs and the component names in FIG. 1 to FIG.13 are as follows:
100: busbar assembly, 102: base body, 1022: copper bar support frame, 104: phase copper bar, 1041: phase copper bar body, 1042: first copper bar part, 1043: first bending part, 1044: second copper bar part, 1045: second bending part, 1046: third copper bar part, 1048: terminal connecting part, 1050: plane part, 1052: phase hook part;
106: neutral point copper bar, 1062: neutral point copper bar body, 1064: transition bending part, 1066: neutral hook part, 1068: neutral top pinhole, 1070: radial protrusion;
108: terminal support frame, 1082: connecting terminal, 1084: support body, 1088: third locating hole, 1090: reinforcing rib, 1182: first locating hole, 1184: second locating hole, 120: weight-reducing groove, 1222: terminal locating protrusion
200: motor structure, 202: rotor structure, 204: stator structure;
300: vehicle, 302: vehicle body, 400: electric power steering system, 411: steering wheel, 412: steering shaft, 413: universal coupling, 414: rotating shaft, 415: rack and pinion gear mechanism, 416: rack shaft, 417: wheel, 421: steering torque sensor, 422: control unit, and 423: deceleration mechanism.

### DETAILED DESCRIPTION OF THE DISCLOSURE

To more clearly understand the above purposes, features and advantages of the embodiments of the present disclosure, the embodiments of the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the embodiments of the present disclosure can also be implemented using other embodiments other than these described herein. Therefore, the protection scope of the present disclosure is not limited to the embodiments disclosed in the following text.

Some embodiments of the present disclosure are described in the following by referring to FIG. 1 to FIG.13.

As shown in FIG. 1, the busbar assembly 100 provided by the present embodiment comprises a base body 102 and a terminal support frame 108, wherein, the base body 102 comprises phase copper bars 104, neutral point copper bars 106 and a copper bar support frame 1022; the copper bar support frame 1022 is formed during injection-molding the phase copper bars 104 and the neutral point copper bars 106; after the injection molding, as a plastic housing of the phase copper bars and the neutral point copper bars, the copper bar support frame has the integral effect of fixing and insulating; and through arranging a plurality of copper bars comprising the phase copper bars 104 and neutral point copper bars 106 arranged along the circumferential direction, a terminal support frame 108 is mainly provided on the base body 102, through a plurality of connecting terminals 1082 of the terminal support frame, the connection with an outside power supply or controller is convenient, to achieve the control to the motor connected to the busbar assembly 100.

It should be noted that for all the copper bars, in the present disclosure, all of neutral point copper bars 106 are the same in shape and all of the phase copper bars 104 are the same in shape, and only two types of molds need to be designed during the production, and the production of all of the phase copper bars 104 and the neutral point copper bars 106 can be achieved. It is understandable that all of the phase copper bars 104 adopt the same mold, and all of the neutral point copper bars 106 adopt the same mold. Through arranging all of the neutral point copper bars 106 independently and arranging the phase copper bars 104 in a stacked and staggered manner, the assembling can be achieved, and thus the development and production costs of the molds required for production can be greatly reduced.

It should be noted that an axial overlapping portion necessarily exists when two types of copper bars are mounted on the copper bar support frame 1022.

It should be noted that in the present disclosure, the main structure in the phase copper bars 104 is a phase copper bar body 1041, through limiting the arranging direction of the phase copper bar body 1041, it is vertically placed inside the base body 102, that is, the width direction of the phase copper bar body 1041 coincides with the axial direction of the base body 102. In addition, the width direction is further defined, the structure of the phase copper bar 104 presents a plate shape, the extending plane of the phase copper bar 104 is a plane perpendicular to the thickness direction, and the width direction is perpendicular to the extending direction of the phase copper bar 104.

In addition, since the plurality of phase copper bars 104 and the neutral point copper bars 106 are the same in shape, the resistance of each copper bar is equivalent, this can effectively reduce the imbalance rate between various resistances and reduce the NVH (i.e., Noise, Vibration, and Harshness) risk of motors using the busbar assembly 100 in an automotive structure.

In addition, the phase copper bars 104 and the neutral point copper bars 106 are electrically conducted, and generally, they directly contact each other.

Wherein, for the base body 102, after accomplishing the mounting of the phase copper bars 104 and the neutral point copper bars 106, i.e., after the phase copper bars and the neutral point copper bars are integrally injection-molded to form the copper bar support frame, the whole copper bar support frame, the phase copper bars and the neutral point copper bars are combined into one, and this is more convenient for mounting.

It should be added that each phase copper bar 104 is connected to the end portion of at least one stator winding, a plurality of connecting terminals are provided on the terminal support frame, and a plurality of stator windings can be aggregated and then can achieve the electrical connection with external structures through the connecting terminals.

Furthermore, the shape of the base body 102 itself is circular, which more conforms to the shape of the end surface of a general stator structure.

Wherein, through limiting the distribution of the neutral point copper bars 106 and the phase copper bars 104, the main structure of the neutral point copper bar 106 is a neutral point copper bar body 1062, and its extending direction is a radial direction; the main structure of the phase copper bar 104 is a phase copper bar body 1041, and its extending direction is an axial direction; by adopting a mutually perpendicular arranging manner, the size of the copper bars in the axial direction and the radial direction can be minimized to the greatest extent. In other words, the phase copper bar bodies are vertically placed inside the base body, and the neutral point copper bar bodies are horizontally placed inside the base body.

In addition, the terminal support frame mainly comprises a support body 1084 and three connecting terminals 1082, the plurality of connecting terminals 1082 can be fixed on the support body 1084 and then injection-molded, and finally, the terminal support frame is formed. In addition, the phase copper bars 104 are electrically conducted with the connecting terminals 1082, and the terminal support frame are electrically connected to three phase copper bars 104 at the same time, to achieve a modular conductivity relationship.

It should be added that the extending direction of the phase copper bars 104 and the neutral point copper bars 106 is the length direction of the copper bars, the width direction is the horizontal size of the copper bars, i.e., the plane presented by the extending direction and the width direction of the copper bars is an extending plane, and the direction perpendicular to the extending plane is the thickness direction.

Wherein, when a plurality of connecting terminals 1082 are adopted, three connecting terminals 1082 can be grouped together, each group corresponds to one terminal support frame, i.e., each terminal support frame comprises three connecting terminals, and this facilitates the connection of a three-phase circuit.

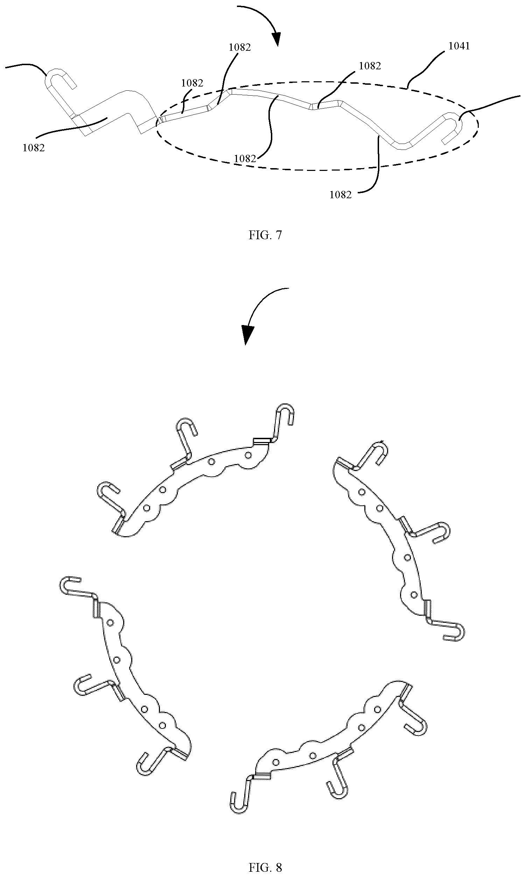

In addition, as shown in FIG. 8, when a plurality of neutral point copper bars 106 are adopted, they will be arranged around the axis of the base body 102 to facilitate the utilization of the positions in the circumferential direction and to cooperate with the phase copper bars 104 that are rotationally symmetrical about the axis to achieve a current path. Wherein, the number of the neutral point copper bars 106 can be an odd number or an even number.

Generally, the number of the neutral point copper bars 106 is an even number and presents a rotational symmetric shape.

As shown in FIG. 1, the busbar assembly 100 provided by the present embodiment comprises a base body 102 and a terminal support frame 108, wherein, the base body 102 comprises phase copper bars 104, neutral point copper bars 106 and a copper bar support frame 1022; the copper bar support frame 1022 is formed during injection-molding the phase copper bars 104 and the neutral point copper bars 106; after the injection molding, as a plastic housing of the phase copper bars and the neutral point copper bars, the copper bar support frame has the integral effect of fixing and insulating; and through arranging a plurality of copper bars comprising the phase copper bars 104 and neutral point copper bars 106 arranged along the circumferential direction, a terminal support frame 108 is mainly provided on the base body 102, through a plurality of connecting terminals 1082 of the terminal support frame, the connection with an outside power supply or controller is convenient, to achieve the control to the motor connected to the busbar assembly 100.

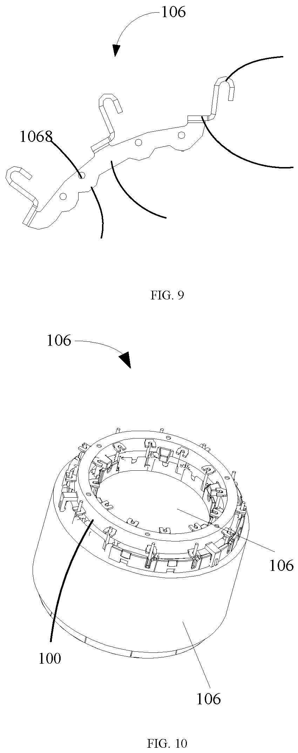

Wherein, as shown in FIG. 9, for the neutral point copper bar 106, it mainly comprises the neutral point copper bar body 1062 and a plurality of transition bending parts 1064; the neutral point copper bar body 1062 extends along the radial direction, while the transition bending parts 1064 are formed by bending at the outer side of the neutral point copper bar body 1062 in the radial direction along the axis, i.e., bending upward from the outer side; neutral hook parts 1066 are provided at the transition bending parts 1064, to provide a welding position for windings under the action of the neutral hook parts 1066, to achieve electrical conductivity.

Furthermore, through limiting each neutral hook part 1066 and limiting it to be at the outer side in the radial direction, this helps the welding operation and provides operating space during the winding, and meanwhile helps observe any skipping of welding or winding.

According to the above structures, a plate-like substrate can be used to form the structure after multiple times of stamping and bending, to improve the yield and reducing the loss rate of materials.

In addition, as shown in FIG. 7, for a phase copper bar body 1041, it mainly comprises three radially staggered parts, i.e., a first copper bar part 1042, a second copper bar part 1044 and a third copper bar part 1046; the three copper bar parts are connected successively, and two adjacent copper bar parts are staggered by a bending part. In an embodiment, the first copper bar part 1042 is connected to the second copper bar part 1044 through a first bending part 1043, and the second copper bar part 1044 is connected to the third copper bar part 1046 through a second bending part 1045; under the action of the first bending part 1043 and the second bending part 1045, the radial positions of the first copper bar part 1042, the second copper bar part 1044 and the third copper bar part 1046 are staggered, and thus there is no position conflict therebetween when a plurality of phase copper bars 104 are arranged in a stacked manner, thus achieving a normal converging and conducting effect.

Furthermore, the radial position of the first copper bar part 1042 is outermost, and the radial position of the third copper bar part 1046 is innermost. Or the radial position of the first copper bar part 1042 is arranged at the inside, and the radial position of the third copper bar part 1046 is arranged at the outside.

The radial positions of the first copper bar part 1042, the second copper bar part 1044 and the third copper bar part 1046 are changed monotonically.

In the case that a plurality of phase copper bars 104 are adopted, every three phase copper bars 104 are grouped together and stacked; during the arrangement, a plane part 1050 of one of two adjacent phase copper bars 104 will cover the second copper bar part 1044 of the other one of the two adjacent phase copper bars 104, i.e., for the three phase copper bars 104, a phase copper bar 1, a phase copper bar 2 and a phase copper bar 3 are arranged successively in the circumferential direction, the plane part of the phase copper bar 1 covers the second copper bar part 1044 of the phase copper bar 2, and the plane part of the phase copper bar 2 covers the second copper bar part 1044 of the phase copper bar 3.

Furthermore, for the phase copper bar 1, the phase copper bar 2 and the third phase copper bar 3, their radial positions of their first copper bar parts are the same, i.e., the three first copper bar parts 1042 are located at the same circumferential surface; likewise, the radial positions of the three second copper bar parts 1044 are the same, the radial positions of the three third copper bar parts 1046 are the same, i.e., after the stacked arrangement, the radial positions of the first copper bar part 1042, the second copper bar part 1044 and the third copper bar part 1046 are unified, the integral configuration is more organized, and the balance of the overall structure of the busbar is ensured at the same time.

Through adjusting the distribution method for the second copper bar parts 1044 in the phase copper bars 104 and the neutral point copper bar bodies 1062 in the neutral point copper bars 106, the phase copper bar 104 and the neutral point copper bar 106 are arranged perpendicular to each other, the second copper bar part 1044 is located at the middle position of the phase copper bar 104, the neutral point copper bar body 1062 is used as the main body of the neutral point copper bar 106, and it helps the injection-molding that they two are placed perpendicular to each other.

Two phase hook parts 1052 are provided for each phase copper bar 104, and the phase hook parts 1052 are provided on the first copper bar part 1042 and the third copper bar part 1046 and extend outwards, to help weld the winding to the phase hook parts 1052.

In an embodiment, the axial positions of the neutral hook parts 1066 and the phase hook parts 1052 are limited and are limited to be located between the upper surface and the lower surface of the base body 102, i.e., the projections of the two hook parts on the circumferential surface of the base body 102 are located within the base body 102, and thus the hook parts do not go beyond the range of the base body 102 in the axial direction, and unnecessary dimensions in the axial direction are reduced.

Furthermore, the heights of the hook parts on the two copper bars are the same, i.e., the axial positions of the neutral hook part 1066 and the phase hook part 1052 keep the same, and during winding welding, the winding welding process of the entire busbar can be achieved without adjusting the axial welding position, and this greatly improves the production efficiency.

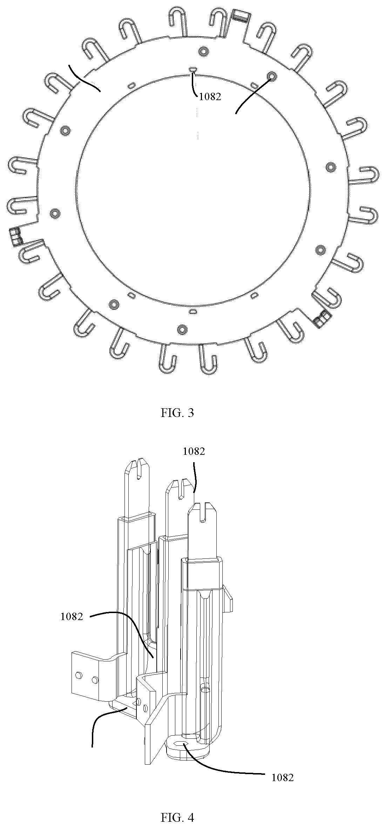

As shown in FIG. 4, FIG. 5 and FIG. 6, the busbar assembly 100 provided by the present embodiment comprises a base body 102 and a terminal support frame 108, wherein, the base body 102 comprises phase copper bars 104, neutral point copper bars 106 and a copper bar support frame 1022; the copper bar support frame 1022 is formed during injection-molding the phase copper bars 104 and the neutral point copper bars 106; after the injection molding, as a plastic housing of the phase copper bars and the neutral point copper bars, the copper bar support frame has the integral effect of fixing and insulating; and through arranging a plurality of copper bars comprising the phase copper bars 104 and neutral point copper bars 106 arranged along the circumferential direction, a terminal support frame 108 is mainly provided on the base body 102, through a plurality of connecting terminals 1082 of the terminal support frame 108, the connection with an outside power supply or controller is convenient, to achieve the control to the motor connected to the busbar assembly 100.

For the neutral point copper bar 106, as shown in FIG. 9, it mainly comprises the neutral point copper bar body 1062 and a plurality of transition bending parts 1064; the neutral point copper bar body 1062 extends along the radial direction, while the transition bending parts 1064 are formed by bending at the outer side of the neutral point copper bar body 1062 in the radial direction along the axis, i.e., bending upward from the outer side; neutral hook parts 1066 are provided at the transition bending parts 1064, to provide a welding position for windings under the action of the neutral hook parts 1066, to achieve electrical conductivity.

As shown in FIG. 7, for a phase copper bar 104, it mainly comprises three radially staggered parts, i.e., a first copper bar part 1042, a second copper bar part 1044 and a third copper bar part 1046; the three copper bar parts are connected successively, and two adjacent copper bar parts are staggered by a bending part. In an embodiment, the first copper bar part 1042 is connected to the second copper bar part 1044 through a first bending part 1043, and the second copper bar part 1044 is connected to the third copper bar part 1046 through a second bending part 1045; under the action of the first bending part 1043 and the second bending part 1045, the radial positions of the first copper bar part 1042, the second copper bar part 1044 and the third copper bar part 1046 are staggered, and thus there is no position conflict therebetween when a plurality of phase copper bars 104 are arranged in a stacked manner, thus achieving a normal converging and conducting effect.

Furthermore, as shown in FIG. 2, a neutral top pinhole 1068 is provided in the neutral point copper bar body 1062, and during assembling, the neutral point copper bar 106 will be fixed on an injection molding tooling to play a role of injection molding and fixing; after completing the injection molding, the phase copper bar 104 and the neutral point copper bar 106 can be removed together with the copper bar support frame 1022 to facilitate subsequent assembling with the base body 102 and terminals.

In addition, under the action of the neutral top pinhole 1068, the radial width of the neutral point copper bar body 1062 is reduced, and the area of a corresponding cross section will also be reduced, and at the moment, a radial protrusion 1070 can be set on the inner side in the radial direction to ensure that the cross-sectional area where current passes through is consistent with the position of the neutral top pinhole, and this prevents the occurrence of the circumstance that local resistance increases and heating is serious during operation, and thus the use stability of the product is improved.

A terminal connecting part 1048 is provided on the first copper bar part 1042, and the terminal support frame is connected through the terminal connecting part 1048, and the electrical signals of the phase copper bars 104 are transmitted to the connecting terminal through the terminal connecting part 1048, to achieve control or power supply.

Wherein, the terminal support frame is provided with three terminal connecting parts 1048.

It should be explained that for the three phase copper bars 104, after completing the stacked arrangement, the terminal support frame will be directly arranged on the three terminal connecting parts 1048, to help transmit the electrical signals of the phase copper bars 104 to the three connecting terminals.

For the first copper bar part 1042, the plane part 1050 extending in the radial direction is provided at the end of the first copper bar part 1042 away from the first bending part 1043; the plane part 1050 is connected to the first copper bar part 1042, i.e., the width direction of the first copper bar part 1042 extends along the axial direction, while the plane part 1050 extends laterally, i.e., the width direction extends along the radial direction, that is, the width direction of the plane part 1050 is perpendicular to the axial direction; in addition, the phase hook parts 1052 are provided at the other end of the plane part 1050, i.e., the end away from the first copper bar part 1042, to help weld the winding at the phase hook parts 1052.

In addition, the phase hook parts 1052 are provided at the other end of the plane part 1050, i.e., the end away from the terminal connecting part 1048, to help weld the winding at the phase hook parts 1052.

It is understandable that the phase hook parts 1052 can also be formed by extending and bending the plane part 1050, and can also be formed by connecting separate parts.

On the basis of any of the above embodiments, when a plurality of connecting terminals 1082 are adopted, three connecting terminals 1082 can be grouped together, with each group corresponding to one terminal support frame 108, i.e., three connecting terminals 1082 are provided on one terminal support frame 108, and this facilitates the application to the conductivity of a three-phase circuit.

It should be added that after arranging the connecting terminals 1082 on the terminal support frame 108, they can be formed as a whole through injection molding, which is more convenient for installation and assembly.

Furthermore, as shown in FIG. 2 and FIG. 3, through arranging a first locating hole 1182 at a position of the copper bar support frame 1022 corresponding to the phase copper bar 104, and arranging a second locating hole 1184 at opposite position with the neutral point copper bar 106, during assembling, the phase copper bar 104 and the neutral point copper bar 106 will be fixed on an injection molding tooling to play a role of injection molding and fixing; after completing the injection molding, the phase copper bar 104 and the neutral point copper bar 106 can be removed together with the copper bar support frame 1022 to facilitate the subsequent assembling with the base body 102 and terminals.

In addition, as shown in FIG. 2, a weight-reducing groove 120 is provided in the base body 102, which can decrease materials and can also reduce the weight of the base body 102; in addition, arranging the weight-reducing groove 120 in the circumferential direction can maintain approximately the same wall thickness, to ensure the yield rate after injection molding.

As shown in FIG. 4, for a terminal support frame 108, the terminal support frame 108 mainly comprises a support body 1084 and three connecting terminals 1082, and the terminal support frame 108 can be formed by integrally injection-molding the three connecting terminals 1082 on the support body 1084. The phase copper bars 104 are electrically conducted with the connecting terminals 1082, and the terminal support frame 108 is electrically connected to three phase copper bars 104 at the same time, to achieve a modular conductivity relationship.

Furthermore, a third locating hole 1088 is provided in the support body 1084, to achieve the assembling of the terminal support frame 108 through the cooperation of a terminal locating protrusion 1222 and the third locating hole 1088 as shown in FIG. 2.

In addition, as shown in FIG. 4, a reinforcing rib 1090 is provided in the circumferential direction of the connecting terminal, which can improve the strength and improve the stability of a terminal assembly, and avoid deformation and displacement during the assembling.

Furthermore, the extending direction of the connecting terminal is limited, and the connecting terminal is limited to extend along the axial direction, then on the basis that the connecting terminal is arranged inside the support body, it can be connected to external power sources or circuit boards in the axial direction. In addition, for the connecting terminal, one end will extend axially, while the other end will first extend radially inward and then be laterally bent; after bending, it is convenient to weld the terminal connecting part 1048 of the phase copper bar 104, to establish a conductivity relationship.

As shown in FIG. 10, the present embodiment provides a motor structure 200, comprising a rotor structure 202 and a stator structure 204 which are coaxially arranged, wherein, the rotor structure 202 is provided at the inner side of the stator structure 204, thus forming a motor structure 200 with an outer stator and an inner rotor; at the moment, a changing magnetic field will be formed under the action of the stator structure 204 at the inner side, and thus the rotor structure 202 is driven to rotate. In addition, the busbar assembly is provided at one end of the stator structure, meanwhile the busbar assembly is electrically connected to the stator structure, to achieve the control over to the stator structure.

In addition, since the motor structure 200 comprises any of the embodiments of the busbar assembly 100, then has all the beneficial effects of any of the busbar assembly 100 in the first aspect, which are not repeated herein.

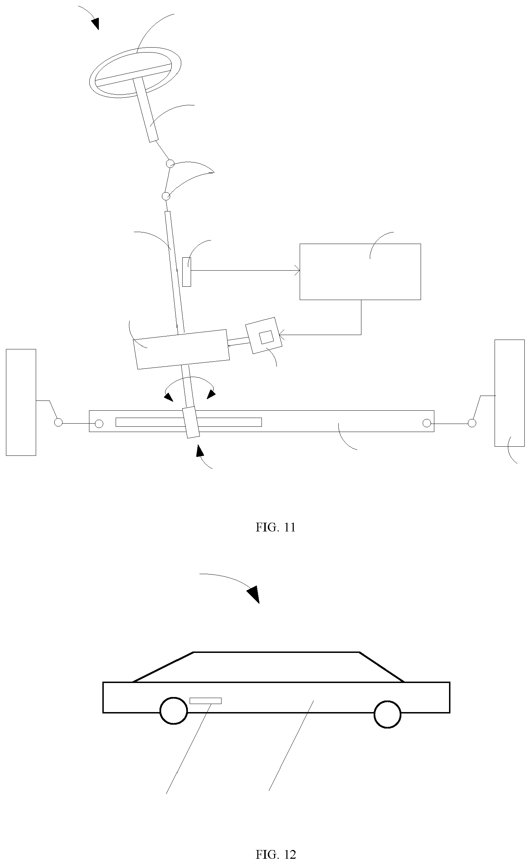

As shown in FIG. 11, the present embodiment provides an electric power steering system 400, comprising the motor structure 200 in any of the above possible embodiments, and therefore, the electric power steering system 400 provided by the present embodiment has all the beneficial effects of the motor structure 200 provided by the above embodiments.

Wherein, the electric power steering system 400 (Electric Power Steering, abbreviated as EPS) is an electric power steering system that directly relies on the motor structure 200 to provide auxiliary torque power, and compared with a traditional hydraulic power steering system (HPS), the EPS system has a simple structure and can be assembled flexibly, which can save energy and protect the environment, and most modern vehicle models are equipped with the EPS system.

The electric power steering system 400 comprises a plurality of implementation methods, wherein, one of the plurality of implementation methods is described in the following. In an embodiment, the EPS system has an electric power steering system and an auxiliary torque mechanism that generates an auxiliary torque. This auxiliary torque assists the steering torque of the electric power steering system generated by operating the steering wheel by a driver. Through the auxiliary torque, the operating burden of the driver is reduced.

Wherein, the electric power steering system 400 comprises a steering wheel 411, a steering shaft 412, an universal coupling 413, a rotating shaft 414, a rack and pinion gear mechanism 415, a rack shaft 416, and vehicle wheels 417 for left and right steering, etc.

Wherein, the auxiliary torque mechanism comprises a steering torque sensor 421, a vehicle electronic control unit 422, a motor and a speed reduction mechanism 423, etc. In an embodiment, the steering torque sensor 421 detects the steering torque of the electric power steering system. The control unit 422 generates a driving signal based on the detection signal of the steering torque sensor 421. The motor generates an auxiliary torque corresponding to the steering torque based on the driving signal. The motor transmits the generated auxiliary torque to the electric power steering system through the speed reduction mechanism 423.

As shown in FIG. 12, the present embodiment provides a vehicle 300, comprising a vehicle body 302 and the motor structure 200 provided in the vehicle body 302; the vehicle body 302 mainly has a protection function to the motor structure 200; since the vehicle body 302 is provided with the motor structure 200 therein, it has all the beneficial effects of any of the motor structures in the embodiments in the above second aspect, which are not repeated herein.

Wherein, the motor structure in the vehicle can serve as a main driving structure, i.e., an electric vehicle, and can also serve as the driving structure for other equipment inside the vehicle, such as fans.

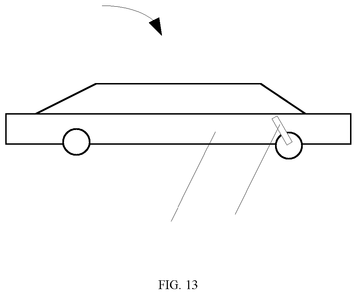

Apparently, as shown in FIG. 13, the motor structure 200 can be used to drive the electric power steering system 400, to achieve the steering of the vehicle 300.

According to the busbar assembly, the motor structure, the electric power steering system and the vehicle provided in the present disclosure, all the neutral point copper bars are the same in shape, and all the phase copper bars are the same in shape, and only two molds need to be designed during the production, and then the production of all the phase copper bars and the neutral point copper bars can be achieved, and this can greatly reduce the development and production costs of molds required for production.

In the present disclosure, the terms of "first", "second" and "third" are used only for the purpose of description and shall not be understood to indicate or imply any relative importance; the phrase of "a plurality of" indicates two or more than two, unless otherwise explicitly specified or defined. The terms of "mounting", "connected to", "connection", "fixing" and the like should be understood in a broad sense, for example, "connection" may be a fixed connection, and may also be a removable connection, or an integral connection; and "connected to" may be a direct connection and may also be an indirect connection through an intermediate medium. A person of ordinary skills in the art could understand the specific meanings of the terms in the present disclosure according to specific situations.

In the specification of the present disclosure, it is understandable that the orientation or position relations indicated by the terms of "upper", "lower", "left", "right", "front", "rear" and the like are based on the orientation or position relations shown in the accompanying drawings, and they are just intended to conveniently describe the present disclosure and simplify the description, and are not intended to indicate or imply that the devices or units as indicated should have specific orientations or should be configured or operated in specific orientations, and then should not be construed as limitations to the present disclosure.

In the description of the present specification, the descriptions of the phrases "one embodiment", "some embodiments" and "specific embodiments" and the like mean that the specific features, structures, materials or characteristics described in combination with the embodiment(s) or example(s) are comprised in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present disclosure, and are not used to limit the present disclosure. For a person skilled in the art, the present disclosure may have various changes and variations. Any modifications, equivalent substitutions, improvements, etc. made within the spirit and principle of the present disclosure shall all be comprised in the protection scope of the present disclosure.

## Claims

1. A busbar assembly, comprising:
a base body comprising a plurality of phase copper bars and a plurality of neutral point copper bars, wherein, the phase copper bars and the neutral point copper bars are integrally injection-molded to form a copper bar support frame, and the plurality of phase copper bars and the plurality of neutral point copper bars are arranged along a circumferential direction of the copper bar support frame; and
a terminal support frame, provided on the base body, wherein the terminal support frame comprises a plurality of connecting terminals connected to the phase copper bars;
wherein, the plurality of phase copper bars are the same in shape, and the plurality of neutral point copper bars are the same in shape; the neutral point copper bars comprise neutral point copper bar bodies extending in a radial direction of the base body, the phase copper bars comprise phase copper bar bodies extending in an axial direction of the base body, and a projection of at least one phase copper bar body and a projection of at least one neutral point copper bar body on an end face of the base body overlap each other.

2. The busbar assembly according to claim 1, wherein, the plurality of neutral point copper bars are arranged circumferentially around an axis of the base body, and the plurality of phase copper bars are rotationally symmetric about the axis of the base body.

3. The busbar assembly according to claim 1 or claim 2, wherein, the neutral point copper bar comprises:
the neutral point copper bar body in an arc shape;
a plurality of transition bending parts provided at an outer side of the neutral point copper bar body in a radial direction of the neutral point copper bar body, wherein the transition bending parts are formed by bending the neutral point copper bar body along an axial direction; and
neutral hook parts, connected to the transition bending parts.

4. The busbar assembly according to claim 3, wherein, the phase copper bar body comprises:
a first copper bar part, a second copper bar part and a third copper bar part having different radial positions, wherein the first copper bar part is connected to the second copper bar part through a first bending part, and the second copper bar part is connected to the third copper bar part through a second bending part.

5. The busbar assembly according to claim 4, wherein, a plane part is provided at an end of the first copper bar part away from the first bending part, the plane part extends along the radial direction, and a phase hook part is formed at an end of the plane part away from the first copper bar part;
wherein, a width direction of the plane part is perpendicular to the axial direction of the base body.

6. The busbar assembly according to claim 5, wherein, every three phase copper bars are arranged around an axis in a circumferential direction and are arranged stacking one another, wherein, in two adjacent phase copper bars, the plane part of one phase copper bar covers the second copper bar part of the other phase copper bar.

7. The busbar assembly according to claim 6, wherein, in the three phase copper bars in the stacked arrangement, the radial positions of the first copper bar parts of the three phase copper bars are the same, the radial positions of the second copper bar parts of the three phase copper bars are the same, and the radial positions of the third copper bar parts of the three phase copper bars are the same.

8. The busbar assembly according to claim 7, wherein, at least a portion of the three first copper bar parts are located in a circle of a same radius, at least a portion of the three second copper bar parts are located in a circle of a same radius, and at least a portion of the three third copper bar parts are located in a circle of a same radius.

9. The busbar assembly according to any one of claims 5 to 8, wherein, each phase copper bar is provided with two phase hook parts extending outward along the radial direction, and the two phase hook parts are respectively provided on the plane part and on the third copper bar part.

10. The busbar assembly according to claim 9, wherein, both of the two phase hook parts on each phase copper bar are located at an outer side of the phase copper bar in a radial direction of the phase copper bar; or
an opening of the phase hook part faces an inner side of the base body in the radial direction of the base body, or faces a circumferential side of the base body; or
the neutral hook parts and the phase hook parts are located at a same height in the axial direction; or
projections of the neutral hook parts and projections the phase hook parts on a circumferential surface of the base body are located within the base body; or
the openings of the phase hook parts and openings of the neutral hook parts face a same direction; or
the projections of the phase hook parts and the projections of the neutral hook parts on the end face of the base body do not overlap each other.

11. The busbar assembly according to any one of claims 5 to 10, wherein, the first copper bar part is provided with a terminal connecting part extending along the axial direction, the connecting terminal is electrically connected to the terminal connecting part, and the terminal connecting part is arranged at a position on the first copper bar part between the plane part and the first bending part.

12. The busbar assembly according to any one of claims 1 to 11, further comprising:
a first locating hole, provided in the copper bar support frame corresponding to the phase copper bar; and
a second locating hole, provided in the copper bar support frame corresponding to the neutral point copper bar.

13. The busbar assembly according to any one of claims 1 to 12, comprising:
a weight-reducing groove, provided in the copper bar support frame along a circumferential direction of the base body.

14. The busbar assembly according to any one of claims 1 to 13, wherein,
the copper bar support frame is provided with a terminal locating protrusion, and the terminal support frame comprises a support body, and further comprises: a third locating hole, provided in the support body; or
a reinforcing rib, provided at a side of the connecting terminal in a circumferential direction of the connecting terminal; or
an end of the connecting terminal extends axially outward, an other end extends radially inward and then is bent toward the side in the circumferential direction, and the other end of the connecting terminal is welded to the terminal connecting part of the phase copper bar.

15. The busbar assembly according to any one of claims 1 to 14, wherein,
a width direction of the phase copper bar body coincides with the axial direction of the base body, and the width direction is a direction perpendicular to an extending direction of the phase copper bar in an extending plane of the phase copper bar.

16. A motor structure, comprising:
a rotor structure;
a stator structure, coaxially arranged with the rotor structure, and
a busbar assembly according to any one of claims 1 to 15, provided at an end of the stator structure.

17. An electric power steering system, comprising a motor structure according to claim 16.

18. A vehicle, comprising:
a vehicle body;
a motor structure according to claim 16, provided in the vehicle body; or
an electric power steering system according to claim 17, provided in the vehicle body.
